# EUROPÄISCHE PATENTANMELDUNG

(11) **EP 3 995 549 A1**
(43) Veröffentlichungstag der Anmeldung: **11.05.2022**
(21) Anmeldenummer: 20206557.9
(22) Anmeldetag: 09.11.2020
(51) Int. Cl.: C09D 163/00, C08G 59/50

(54) **BODENSCHUTZSYSTEM MIT HOHER DYNAMISCHER RISSÜBERBRÜCKUNG**

(71) Anmelder: Sika Technology AG, 6340 Baar (CH)
(72) Erfinder: Grötzinger, Jochen, 73525 Schwäbisch Gmünd (DE); von der Brüggen, Uwe, 74909 Meckesheim (DE); Sarioglu, Oguz, 74080 Heilbronn (DE); Kasemi, Edis, 8046 Zürich (CH)
(74) Vertreter: Sika Patent Attorneys

(57) **Zusammenfassung**

Gegenstand der Erfindung ist ein Bodenschutzsystem, umfassend
(i) gegebenenfalls mindestens eine Epoxidharz-Grundierung,
(ii) mindestens eine Polyurethan-Beschichtung,
(iii) gegebenenfalls Quarzsand, welcher in und/oder auf die Polyurethan-Beschichtung gestreut wurde, und
(iv) eine Epoxidharz-Versiegelung, erhalten aus einer Harz-Komponente enthaltend mindestens ein Epoxid-Flüssigharz und einer Härter-Komponente enthaltend mindestens ein Amin der Formel (I).

Das erfindungsgemässe Bodenschutzsystem verfügt über eine ästhetisch schöne, harte und robuste Oberfläche und eine gute dynamische Rissüberbrückung bei überraschend hoher Dehnbarkeit der Versiegelung. Es ist besonders geeignet als Oberflächenschutzsystem für Parkdecks und befahrbare Rampen.

## Beschreibung

### Technisches Gebiet

Die Erfindung betrifft ein mehrschichtiges Oberflächenschutzsystem mit hoher dynamischer Rissüberbrückung für die Böden von Parkdecks.

### Stand der Technik

Beschichtungsaufbauten aus vernetzten Kunststoffen wie Polyurethan oder Epoxidharz sind bekannt als Oberflächenschutzsysteme für Betonbauwerke. Dabei bestehen je nach Bauwerk unterschiedliche Anforderungen. Die Böden von Parkdecks benötigen ein Oberflächenschutzsystem, welches den darunterliegenden Boden, welcher typischerweise aus mit Stahl armiertem Beton besteht, dauerhaft gegen das Eindringen von Feuchtigkeit, Salzwasser, Treibstoffen, Schmieröl und weiteren als Verschmutzung auf den Boden einwirkenden Substanzen abdichtet, über eine harte, robuste Oberfläche mit guter Rutschhemmung verfügt und hohe ästhetische Ansprüche erfüllt. Weiterhin soll das Oberflächenschutzsystem einfach applizierbar sein, keine übermässigen Emissionen durch Lösemittel oder starke Gerüche verursachen und gute rissüberbrückende Eigenschaften aufweisen, damit es bei Bewegungen im darunterliegenden Boden aufgrund von Temperaturwechseln, Erschütterungen und den mechanischen Belastungen durch das Befahren nicht beschädigt wird.
Oberflächenschutzsysteme und die damit verbundenen Anforderungen und Prüfungen sind in verschiedenen Richtlinien und Normen beschrieben, beispielsweise in der Richtlinie "Schutz und Instandsetzung von Betonbauwerken" vom Deutschen Ausschuss für Stahlbeton oder der DIN EN 1504-2, wo die Oberflächenschutzsysteme OS 10 und OS 11 mit hoher dynamischer Rissüberbrückungsfähigkeit beschrieben sind, sowie in der EN 1062-7 Verfahren B 3.2 oder B 4.2, wo die Prüfung der dynamischen Rissüberbrückung bei - 20°C mit einer Rissweitenänderung von 0.2 bzw. 0.3 mm beschrieben ist. Dabei wird ein Betonriss bei - 20°C mit einer Frequenz von 0.03 Hz 1000 mal bewegt, wobei im darüberliegenden Beschichtungsaufbau keine Risse entstehen dürfen. Gemäss überarbeiteter Richtline dürfen neu auch auf der Oberfläche der Versiegelung keine Risse sichtbar sein.
Oberflächenschutzsysteme für Parkdecks umfassen typischerweise eine elastische Polyurethan-Beschichtung und eine Versiegelung (Top Coat) aus hartem, glasartigem Epoxidharz-Material. Dieses ist sehr robust, d.h. schlag- und kratzfest sowie abrasionsbeständig, aber kaum dehnbar und somit kritisch in Bezug auf Rissbildung. Bei den aus dem Stand der Technik bekannten Oberflächenschutzsystemen entstehen bei der beschriebenen Prüfung auf dynamische Rissüberbrückung kleine Risse in der Versiegelung, auch wenn die darunterliegende Polyurethan-Beschichtung unbeschädigt bleibt. Mikrorisse in der Versiegelung bedeuten aber eine Schwächung des Oberflächenschutzsystems, insbesondere bei eindringenden Verschmutzungen. Dies beeinträchtigt die Ästhetik des Bodens und belastet die Dauerhaftigkeit der Polyurethan-Beschichtung. Ein Oberflächenschutzsystem für Parkdecks, welches den Test auf dynamische Rissüberbrückung ganz ohne Rissbildung in der Versiegelung besteht, ist aus dem Stand der Technik nicht bekannt.
In US 5,739,209 werden Epoxidharz-Produkte mit alkyliertem 2-Methyl-1,5-pentandiamin als Härter und einem Acrylat Copolymer zum Flexibilisieren beschrieben. Die erhaltenen Produkte sind nicht hart genug für eine Verwendung als Versiegelung für Parkdeck-Beschichtungen.
Epoxidharz-Beschichtungen mit N-Benzyl-1,2-propandiamin oder N-Benzyl-1,2-ethandiamin im Härter sind beschrieben in EP 3,180,383 oder EP 3,344,677. Diese Amine ermöglichen Beschichtungen mit schönen Oberflächen und hohem Glanz, auch bei Aushärtung in der Kälte.

### Darstellung der Erfindung

Aufgabe der vorliegenden Erfindung ist es, ein Oberflächenschutzsystem für die Böden von Parkdecks zur Verfügung zu stellen, welches die Nachteile des Standes der Technik in Bezug auf Rissbildung in der Versiegelung überwindet. Überraschenderweise löst ein Bodenschutzsystem gemäss Anspruch 1 diese Aufgabe. Das Bodenschutzsystem umfasst mindestens eine gegebenenfalls mit Quarzsand abgestreute Polyurethan-Beschichtung und eine Epoxidharz-Versiegelung erhalten aus einer Harz-Komponente enthaltend mindestens ein Epoxid-Flüssigharz und einer Härter-Komponente enthaltend mindestens ein Amin der Formel (I). Das Bodenschutzsystem verfügt über eine hervorragende Verträglichkeit und Haftung der Schichten und eine überraschend hohe Dehnbarkeit der Versiegelung, bei hoher Härte, Robustheit und Ästhetik der Oberfläche. Überraschenderweise verbessert das Amin der Formel (I) die mechanische Verträglichkeit zwischen der elastischen Polyurethan-Beschichtung und der eher starren Epoxidharz-Versiegelung, wodurch ein solches Bodenschutzsystem über eine hohe Rissüberbrückung ohne Rissbildung in der Versiegelung verfügt.
Das erfindungsgemässe Bodenschutzsystem ist mit wenig Geruchsbelastung einfach einbaubar und härtet auch bei kühlen Umgebungstemperaturen schnell und zuverlässig aus. Die Versiegelung ist ohne oder mit nur wenig Verdünner in der gewünschten Schichtdicke bei ausreichend langer Topfzeit gut applizierbar, wobei schnell eine gut entlüftete, glatte, ebenmässige Oberfläche ohne Flecken oder Krater und wenig Neigung zum Vergilben entsteht. Das Bodenschutzsystem ist auf der unteren, dem Substrat zugewandten Seite gut dehnbar und elastisch und verfügt über eine harte, robuste Oberfläche mit hoher Abrasionsbeständigkeit und Kratzfestigkeit und hoher Robustheit gegenüber Kälte, Hitze, Wasser, Streusalz, Treibstoffen, Motorenöl und üblichen Reinigungsmitteln. Für eine besonders gute Rutschhemmung ist das Bodenschutzsystem mit Quarzsand abgestreut, wobei die Versiegelung über den in die Polyurethan-Beschichtung eingebetteten, teilweise vorstehenden Sandkörnern appliziert ist. Dabei verhindert die gut haftende Epoxidharz-Versiegelung das Ausbrechen von Sandkörnern bei mechanischer Beanspruchung.
Das erfindungsgemässe Bodenschutzsystem vermag die Anforderungen an ein Oberflächenschutzsystem OS 10 und OS 11a in Bezug auf dynamische Rissüberbrückung bei - 20°C ganz ohne Rissbildung in der Versiegelung zu erfüllen und ist dadurch besonders geeignet als Oberflächenschutzsystem für Parkdecks und befahrbare Rampen.
Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Bodenschutzsystem, umfassend
(i) gegebenenfalls mindestens eine Epoxidharz-Grundierung,
(ii) mindestens eine Polyurethan-Beschichtung,
(iii) gegebenenfalls Quarzsand, welcher in und/oder auf die Polyurethan-Beschichtung gestreut wurde, und
(iv) eine Epoxidharz-Versiegelung, erhalten aus einer Harz-Komponente enthaltend mindestens ein Epoxid-Flüssigharz und einer Härter-Komponente enthaltend mindestens ein Amin der Formel (I),

   Z-NH-A-NH-CH₂-Y (I)

   wobei
   A für einen zweiwertigen C₂ bis C₁₅ Alkylen-, Cycloalkylen- oder Arylalkylen-Rest, welcher gegebenenfalls ein oder mehrere Stickstoffatome oder Ethergruppen enthält, steht,
   Z für H oder ---CH₂-Y steht, und
   Y für H oder einen C₁ bis C₁₁ Alkyl-, Cycloalkyl-, Arylalkyl- oder Aryl-Rest steht,
   wobei die beiden Stickstoffatome, an welche der Rest A gebunden ist, durch mindestens zwei C-Atome voneinander getrennt sind und das Amin der Formel (I) insgesamt mindestens 8 C-Atome enthält.

Als "Polyurethan" wird eine Zusammensetzung oder ein ausgehärteter elastischer Kunstoff bezeichnet, welcher Urethangruppen und gegebenenfalls Harnstoffgruppen aufweist.
Als "Versiegelung" wird die oberste Schicht einer Bodenbeschichtung bezeichnet (Top Coat).
Als "Epoxid-Flüssigharz" wird ein technisches Polyepoxid mit einer Glasübergangstemperatur unterhalb von 25°C bezeichnet.
Als "lagerstabil" wird eine Zusammensetzung bezeichnet, wenn sie bei Raumtemperatur in einem geeigneten Gebinde während längerer Zeit, typischerweise während mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Mit "Poly" beginnende Substanznamen wie Polyisocyanat, Polyamin oder Polyepoxid bezeichnen Substanzen, die formal zwei oder mehr der in ihrem Namen vorkommenden funktionellen Gruppen pro Molekül enthalten.
Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.
Als "Aminwasserstoff" werden die Wasserstoffatome von primären und sekundären Aminogruppen bezeichnet.
Als "Aminwasserstoff-Equivalentgewicht" wird die Masse eines Amins oder einer Amin-haltigen Zusammensetzung, die ein Mol-Equivalent Aminwasserstoff enthält, bezeichnet.
Als "Verdünner" wird eine Flüssigkeit bezeichnet, welche die Viskosität einer härtbaren Zusammensetzung zu senken vermag und bei der Aushärtung chemisch nicht ins Polymer eingebunden wird.
Als "Molekulargewicht" wird die molare Masse (in Gramm pro Mol) eines Moleküls bezeichnet. Als "mittleres Molekulargewicht" wird das Zahlenmittel Mₙ einer polydispersen Mischung von oligomeren oder polymeren Molekülen bezeichnet. Es wird mittels Gelpermeationschromatographie (GPC) gegen Polystyrol als Standard bestimmt.
Als "Topfzeit" wird die Zeitspanne ab dem Mischen der Komponenten einer mehrkomponentigen härtbaren Zusammensetzung bezeichnet, innerhalb welcher die Zusammensetzung ohne Einbussen verarbeitet werden kann.
Als "Gelierzeit" wird die Zeitspanne ab dem Mischen der Komponenten einer Epoxidharz-Zusammensetzung bis zu deren Gelieren bezeichnet.
Als "Raumtemperatur" wird eine Temperatur von 23°C bezeichnet.
Alle im Dokument erwähnten Industriestandards und Normen beziehen sich auf die zum Zeitpunkt der Einreichung der Erstanmeldung gültigen Fassungen.

Gewichtsprozente (Gewichts-%), abgekürzt Gew.-%, bezeichnen Massenanteile eines Bestandteils einer Zusammensetzung oder eines Moleküls, bezogen auf die gesamte Zusammensetzung oder das gesamte Molekül, falls nichts anderes angeben. Die Begriffe "Masse" und "Gewicht" werden im vorliegenden Dokument synonym benutzt.

Bevorzugt sind (i) bis (iv) in dieser Reihenfolge vom Boden bzw. Substrat her von unten nach oben angeordnet.

Bevorzugt sind (i) bis (iv) in direktem Kontakt zueinander.

Bevorzugt sind die mindestens eine Polyurethan-Beschichtung (ii) und die Epoxidharz-Versiegelung (iv) in direktem Kontakt zueinander, und gegebenenfalls zusätzlich in Kontakt mit Quarzsand (iii).

Bevorzugt weist die Polyurethan-Beschichtung eine Schichtdicke im Bereich von 2 bis 6 mm auf.

Bevorzugt ist die Polyurethan-Beschichtung elastisch.
Bevorzugt besteht die Polyurethan-Beschichtung aus einer oder mehreren Schichten und mindestens eine dieser Schichten weist eine Bruchdehnung von mindestens 200%, insbesondere mindestens 300%, auf, bestimmt bei 23°C gemäss DIN EN 53504 bei einer Zuggeschwindigkeit von 200 mm/min. Für den Fall, dass die Polyurethan-Beschichtung aus mehreren Schichten besteht, weist insbesondere mindestens die vom Boden her gesehen unterste Schicht eine Bruchdehnung von mindestens 200%, insbesondere mindestens 300%, auf.

Bevorzugt besteht die Polyurethan-Beschichtung aus zwei Schichten, wobei die untere Schicht, auch Dichtungsschicht genannt, eine Dicke im Bereich von 1.2 bis 3 mm und eine Bruchdehnung von mindestens 200%, bevorzugt mindestens 300%, aufweist, und die obere Schicht, auch Verschleissschicht genannt, eine Dicke im Bereich von 1.2 bis 3 mm und eine Zugfestigkeit von mindestens 9 MPa, bevorzugt mindestens 10 MPa, aufweist und gegebenenfalls mit Quarzsand verfüllt und/oder abgestreut ist, wobei Zugfestigkeit und Bruchdehnung bei 23°C gemäss DIN EN 53504 bei einer Zuggeschwindigkeit von 200 mm/min bestimmt sind.
Insbesondere weist die Dichtungsschicht eine höhere Dehnbarkeit und geringere Härte als die Verschleissschicht auf.

Ein solcher Aufbau der Polyurethan-Beschichtung ermöglicht ein besonders robustes und gut rissüberbrückendes Bodenschutzsystem, wobei die untere Dichtungsschicht die auf das Bodenschutzsystem einwirkenden Dehn- und Stauchkräfte durch Rissbewegungen im darunterliegenden Boden besonders gut auffangen kann, die darüberliegende Verschleissschicht eine hohe Härte und Robustheit des Bodenschutzsystems gewährleistet und der gegebenenfalls eingestreute Quarzsand eine hohe Rutschhemmung ermöglicht und die hohe Härte und Robustheit zusätzlich unterstützt.

Bevorzugt umfasst das Bodenschutzsystem Quarzsand, welcher auf die Polyurethan-Beschichtung gestreut wurde. Die Oberfläche der Polyurethan-Beschichtung ist also bevorzugt mit Quarzsand abgestreut.

Die Polyurethan-Beschichtung wird auf einen gegebenenfalls mit mindestens einer Grundierung vorbehandelten Boden appliziert.

Die Oberfläche des Bodens, beziehungsweise das Substrat, auf welchen/welches das Bodenschutzsystem appliziert wird, besteht insbesondere aus Beton, Mörtel, Zementestrich, Faserzement, Backstein, Ziegel, Gips, Naturstein wie Granit oder Marmor, Asphalt, eine Reparatur- oder Nivelliermasse auf Basis PCC (Polymermodifizierter Zementmörtel) oder ECC (Epoxidharz-modifizierter Zementmörtel), oder einer Kombination davon.
Das Substrat ist gegebenenfalls vorbehandelt, insbesondere mittels Schleifen, Sandstrahlen oder Kugelstrahlen.
Bevorzugt ist das Substrat Beton, insbesondere mit Stahl armierter Beton.

Vor der Applikation der Polyurethan-Beschichtung wird auf den Boden bevorzugt mindestens eine Epoxidharz-Grundierung, auch Epoxidharz-Primer genannt, appliziert. Die Grundierung dient insbesondere dazu, die Oberfläche des Bodens zu verfestigen, allfällige Poren zu verschliessen und eine gute Haftung zwischen dem Boden und der Polyurethan-Beschichtung sicherzustellen.
Die Grundierung wird typischerweise mit einem Pinsel, einer Bürste, einer Rolle oder einem Gummischieber verteilt. Der Auftrag erfolgt in einer oder mehreren Schichten, typischerweise in einer Menge im Bereich von etwa 0.2 bis 0.5 kg/m². Als Epoxidharz-Grundierung geeignet sind kommerziell erhältliche Produkte, insbesondere Sikafloor^{®}-150, Sikafloor^{®}-151, Sikafloor^{®}-160 oder Sikafloor^{®}-161 (alle von Sika).

Die Polyurethan-Beschichtung wird insbesondere im flüssigen Zustand auf den gegebenenfalls grundierten Boden appliziert.

Bevorzugt enthält die Polyurethan-Beschichtung im flüssigen Zustand mindestens ein Polyisocyanat und/oder mindestens ein Isocyanatgruppen-haltiges Polymer.

Als Polyisocyanat geeignet ist insbesondere ein oligomeres oder polymeres Derivat von mindestens einem Diisocyanat, welches bevorzugt ausgewählt ist aus der Gruppe bestehend aus Diphenylmethandiisocyanat (MDI), Toluoldiisocyanat (TDI), 1,6-Hexandiisocyanat (HDI) und Isophorondiisocyanat (IPDI).
Davon bevorzugt sind Carbodiimide or Uretonimine von MDI, polymeres MDI, oligomeres TDI, Biurete, Isocyanurate, Uretdione, Iminooxadiazindione oder Allophanate von HDI, Isocyanurate von IPDI oder gemischte Isocyanurate von TDI und HDI.
Besonders bevorzugt ist eine bei Raumtemperatur flüssige Form von MDI, insbesondere polymeres MDI oder ein Carbodiimid or Uretonimin von MDI. Als "polymeres MDI" wird dabei ein Gemisch aus MDI und MDI-Homologen bezeichnet.

Ein geeignetes Isocyanatgruppen-haltiges Polymer wird bevorzugt erhalten aus der Reaktion von mindestens einem Diisocyanat und mindestens einem Polyol. Dabei wird ein Überschuss an monomerem Diisocyanat mit dem Polyol vermischt und in Abwesenheit von Feuchtigkeit bei einer Temperatur im Bereich von 20 bis 160°C, bevorzugt 40 bis 140°C umgesetzt, gegebenenfalls in Anwesenheit eines geeigneten Katalysators. Bevorzugt ist ein molares NCO/OH-Verhältnis im Bereich von 1.5/1 bis 10/1, bevorzugt 1.8/1 bis 7/1.

Als Diisocyanat für die Herstellung eines Isocyanatgruppen-haltigen Polymers geeignet ist insbesondere MDI, TDI, Xyloldiisocyanat (XDI), HDI, IPDI oder Perhydro-diphenylmethandiisocyanat (HMDI).
Bevorzugt ist MDI, insbesondere 4,4'-Diphenylmethandiisocyanat oder Mischungen davon mit 2,4'-Diphenylmethandiisocyanat, oder TDI, insbesondere 2,4-Toluoldiisocyanat oder Mischungen davon mit 2,6-Toluoldiisocyanat, oder IPDI.

Als Polyol für die Herstellung eines Isocyanatgruppen-haltigen Polymers geeignet sind insbesondere handelsübliche Polyetherpolyole, Polyesterpolyole, Polycarbonatpolyole, Polyacrylatpolyole oder OH-Gruppen-haltige Kohlenwasserstoffe. Bevorzugt sind Polyetherpolyole, insbesondere Diole oder Triole auf der Basis von Polypropylenglykol oder Polytetramethylenetherglykol.
Bevorzugt sind Polyole mit einem mittleren Molekulargewicht Mₙ im Bereich von 400 bis 8'000 g/mol, insbesondere 1'000 bis 4'000 g/mol.

Als Polyurethan-Beschichtung geeignet sind einkomponentige oder mehrkomponentige Polyurethane.

Einkomponentige Polyurethane enthalten alle Inhaltsstoffe in einem einzigen feuchtigkeitsdichten Gebinde und sind in dieser Form lagerstabil. Bei der Applikation kommen sie in Kontakt mit Feuchtigkeit, wodurch sie aushärten. Sie werden deshalb auch als "feuchtigkeitshärtend" bezeichnet. Neben Polyisocyanaten und/oder Isocyanagruppen-haltigen Polymeren und weiteren Inhaltsstoffen wie Füllstoffe, Weichmacher, Katalysatoren usw. enthalten sie gegebenenfalls sogenannte latente Härter, insbesondere Aldimine.

Zweikomponentige Polyurethane umfassen eine Härter-Komponente und eine Isocyanat-Komponente, welche in zwei voneinander getrennten Gebinden verpackt sind und erst kurz vor oder bei ihrer Verwendung vermischt werden. Sie härten im vermischten Zustand durch Reaktion der Inhaltsstoffe und gegebenenfalls zusätzlicher Feuchtigkeit aus.

Bevorzugt ist die Polyurethan-Beschichtung zweikomponentig.

Bevorzugt enthält die Härter-Komponente mindestens einen Härter ausgewählt aus Polyolen, zwei- oder mehrwertigen Alkoholen und Polyaminen.

Geeignete Polyole sind handelsübliche Polyole, insbesondere Polyetherpolyole, insbesondere die bereits genannten, Polyetherpolyole mit darin dispergierten Polymer-Partikeln, Polyesterpolyole, Polycarbonatpolyole, Poly(meth)acrylatpolyole, Hydroxylgruppen-haltige natürliche Fette und Öle, inbesondere Ricinusöl, chemisch modifizierte natürliche Fette und Öle, sowie Polykohlenwasserstoffpolyole.

Bevorzugt sind Polyetherpolyole, aliphatische Polyesterpolyole, aliphatische Polycarbonatpolyole, Ricinusöl, Derivate von Ricinusöl oder Polybutadienpolyole.

Bevorzugt sind Polyole mit einem mittleren Molekulargewicht Mₙ im Bereich von 400 bis 6'000 g/mol, insbesondere 500 bis 4'000 g/mol.
Bevorzugt sind Polyole mit einer mittleren OH-Funktionalität im Bereich von 1.7 bis 3.
Bevorzugt sind Polyole mit zumindest teilweise primären Hydroxylgruppen. Solche Polyole sind mit Isocyanaten besonders reaktiv.

Geeignete zwei- oder mehrwertige Alkohole sind insbesondere 1,2-Ethandiol, 1,3-Propandiol, 1,4-Butandiol, 1,5-Pentandiol, 1,6-Hexandiol, 1,4-Cyclohexandimethanol oder Diethylenglykol.

Geeignete Polyamine sind insbesondere solche mit sterisch und/oder elektronisch stark gehinderten Aminogruppen, insbesondere aromatische Diamine, insbesondere 3,5-Diethyl-2,4(6)-toluoldiamin (DETDA, erhältlich als Ethacure^{®} 100 von Albemarle), 3,5-Dimethylthio-2,4(6)-toluoldiamin (erhältlich als Ethacure^{®} 300 von Albemarle) oder Additionsprodukte von Maleinsäurediethylester an aliphatische Polyamine (erhältlich als Desmophen^{®} NH 1220, Desmophen^{®} NH 1420 oder Desmophen^{®} NH 1520 von Covestro).

Die Isocyanat-Komponente enthält mindestens ein Polyisocyanat und/oder Isocyanatgruppen-haltiges Polymer, wie vorgängig beschrieben.

Bevorzugt enthält die Polyurethan-Beschichtung weitere Inhaltsstoffe, insbesondere ausgewählt aus weiteren Härtern, Füllstoffen, Pigmenten, Weichmachern, Katalysatoren, Haftvermittlern, Trocknungsmitteln, Lösemitteln, Verdünnern, Entschäumern, Entlüftern, Antiabsetzmitteln und Stabilisatoren. Solche weitere Inhaltsstoffe können als Bestandteil der Härter- und/oder der Isocyanat-Komponente oder als separate Komponente vorhanden sein.

Vor oder während der Applikation werden die Härter- und die Isocyanat-Komponente und gegebenenfalls vorhandene weitere Komponenten vermischt. Das Mischungsverhältnis zwischen der Härter- und der Isocyanat-Komponente wird bevorzugt so gewählt, dass ein Verhältnis der Isocyanatgruppen zu den Reaktivgruppen der Härter-Komponente im Bereich von 0.5 bis 1.1, bevorzugt 0.7 bis 1.0, liegt. Überschüssige Isocyanatgruppen vernetzen untereinander mit Feuchtigkeit aus der Umgebung.

Mit dem Mischen der Komponenten und gegebenenfalls durch Kontakt mit Feuchtigkeit erfolgt die Aushärtung durch chemische Reaktion, wobei die ausgehärtete Polyurethan-Beschichtung entsteht.

Im Fall einer einkomponentigen Polyurethan-Beschichtung ist kein Vermischen der Komponenten notwendig. Mit dem Applizieren kommt die Beschichtung in Kontakt mit Feuchtigkeit, wodurch die Aushärtung durch chemische Reaktion mit Feuchtigkeit erfolgt und die ausgehärtete Polyurethan-Beschichtung entsteht.

Die Applikation der Polyurethan-Beschichtung erfolgt bevorzugt bei Umgebungstemperatur, insbesondere durch Aufgiessen und anschliessendem gleichmässigem Verteilen mit Hilfe beispielsweise eines Rakels, eines Gummischiebers oder einer Rolle in der gewünschten Menge.

Die Applikation der Polyurethan-Beschichtung kann in einer oder mehreren Schichten erfolgen. Bei einer Applikation in mehreren Schichten kann die Zusammensetzung der Polyurethan-Beschichtung die gleiche sein, oder es kann sich um Polyurethan-Beschichtungen mit unterschiedlicher Zusammensetzung handeln.

In einer bevorzugten Ausführungsform wird die Polyurethan-Beschichtung in nur einer Schicht appliziert, insbesondere in einer Menge im Bereich von 1.8 bis 3 kg/m², welche bevorzugt zusätzlich mit Quarzsand verfüllt und abgestreut wird. Dafür geeignet ist eine Polyurethan-Beschichtung mit hoher Dehnbarkeit, insbesondere mindestens 200%, bevorzugt mindestens 300%.

In einer weiteren bevorzugten Ausführungsform werden zwei Schichten von sich in der Zusammensetzung unterscheidenden Polyurethan-Beschichtungen appliziert. Dabei wird zuerst eine Polyurethan-Beschichtung mit hoher Dehnbarkeit, wie vorgängig beschrieben, in einer Menge im Bereich von 1.5 bis 3 kg/m² appliziert und aushärten lassen, gefolgt von einer Polyurethan-Beschichtung mit mittlerer Dehnbarkeit und hoher Festigkeit, insbesondere einer Zugfestigkeit von mindestens 9 MPa, bevorzugt mindestens 10 MPa, welche bevorzugt zusätzlich mit Quarzsand verfüllt und abgestreut wird.
Dieser zweischichtige Aufbau ist besonders bevorzugt. Er ermöglicht im unteren Bereich des Bodenschutzsystems eine hohe Dehnbarkeit und Flexibilität, und weiter oben eine höhere Härte bei höherer Steifigkeit. Zudem wird in einem zweischichtigen Aufbau insgesamt eine höhere Schichtdicke erreicht, was für die Qualität und Dauerhaftigkeit der Beschichtung vorteilhaft ist.

Als Polyurethan-Beschichtung mit hoher Dehnbarkeit und mittlerer Festigkeit geeignet ist insbesondere eine zweikomponentige Polyurethan-Beschichtung auf der Basis eines TDI-Polymers und 3,5-Dimethylthio-2,4(6)-toluoldiamin als Härter, insbesondere Sikafloor^{®}-376 (von Sika).

Als Polyurethan-Beschichtung mit mittlerer Dehnbarkeit und hoher Festigkeit geeignet ist insbesondere eine zweikomponentige Polyurethan-Beschichtung auf der Basis einer flüssigen Form von MDI und Ricinusöl und/oder Ricinusöl-basiertem Polyol als Härter, insbesondere Sikafloor^{®}-377 (von Sika).

Die Zugfestigkeit und die Bruchdehnung der Polyurethan-Beschichtung ist jeweils bestimmt bei 23°C gemäss DIN EN 53504 mit einer Zuggeschwindigkeit von 200 mm/min an hantelförmigen Prüfkörpern von 2 mm Dicke, welche frei von zusätzlich eingestreutem Quarzsand sind.

Als Quarzsand zum Einstreuen und/oder im Überschuss Abstreuen in und auf die noch flüssige Polyurethan-Beschichtung geeignet ist insbesondere Quarzsand mit einer Korngrösse im Bereich von 0.05 bis 10 mm.
Bevorzugt wird die frisch applizierte Polyurethan-Beschichtung zuerst mit einem feineren Quarzsand, insbesondere mit einer Korngrösse im Bereich von 0.1 bis 0.3 mm, so eingestreut, dass der Sand als zusätzlicher Füllstoff vollständig in die Beschichtung einsinkt, und anschliessend auf der Oberfläche mit einem gröberen Quarzsand, insbesondere mit einer Korngrösse im Bereich von 0.3 bis 0.8 mm, im Überschuss abgestreut, wobei überschüssiger Quarzsand nach der Aushärtung der Polyurethan-Beschichtung entfernt wird, insbesondere mittels Staubsauger oder Besen. So wird eine körnige Oberfläche erhalten, welche eine besonders hohe Ruschhemmung und Härte ermöglicht.

Die Epoxidharz-Versiegelung wird auf die gegebenenfalls mit Quarzsand abgestreute Polyurethan-Beschichtung appliziert. Sie wird erhalten aus einer Harz-Komponente enthaltend mindestens ein Epoxid-Flüssigharz und einer Härter-Komponente enthaltend mindestens ein Amin der Formel (I).

Bevorzugt als Epoxid-Flüssigharz sind bei Raumtemperatur flüssige, aromatische Diepoxide mit einem Epoxid-Equivalentgewicht im Bereich von 110 bis 200 g/mol, bevorzugt 150 bis 200 g/mol, insbesondere technische Bisphenol A-Diglycidylether und/oder Bisphenol F-Diglycidylether, wie sie kommerziell beispielsweise von Olin, Huntsman oder Momentive erhältlich sind. Diese Flüssigharze ermöglichen eine schnelle Aushärtung und eine hohe Harte und Robustheit.

Zusammen mit dem Epoxid-Flüssigharz kann die Harz-Komponente weitere Epoxidgruppen-haltige Bestandteile enthalten, insbesondere Anteile von Bisphenol A-Festharz oder Novolak-Glycidylethern oder Reaktivverdünner.

Geeignete Reaktivverdünner sind insbesondere Butandioldiglycidylether, Hexandioldiglycidylether, Trimethylolpropandi- oder triglycidylether, Phenylglycidylether, Kresylglycidylether, Guaiacolglycidylether, 4-Methoxyphenylglycidylether, p-n-Butylphenylglycidylether, p-tert.Butylphenylglycidylether, 4-Nonylphenylglycidylether, 4-Dodecylphenylglycidylether, Cardanolglycidylether, Benzylglycidylether, Allylglycidylether, Butylglycidylether, Hexylglycidylether, 2-Ethylhexylglycidylether, oder Glycidylether von natürlichen Alkoholen wie insbesondere C₈- bis C₁₀- oder C₁₂- bis C₁₄- oder C₁₃- bis C₁₅-Alkylglycidylether.

Die Härter-Komponente enthält mindestens ein Amin der Formel (I),

Z-NH-A-NH-CH₂-Y (I)

wobei
A für einen zweiwertigen C₂ bis C₁₅ Alkylen-, Cycloalkylen- oder Arylalkylen-Rest, welcher gegebenenfalls ein oder mehrere Stickstoffatome oder Ethergruppen enthält, steht,
Z für H oder ---CH₂-Y steht, und
Y für H oder einen C₁ bis C₁₁ Alkyl-, Cycloalkyl-, Arylalkyl- oder Aryl-Rest steht,
wobei die beiden Stickstoffatome, an welche der Rest A gebunden ist, durch mindestens zwei C-Atome voneinander getrennt sind und das Amin der Formel (I) insgesamt mindestens 8 C-Atome enthält.

Bevorzugt ist A ausgewählt aus der Gruppe bestehend aus 1,2-Ethylen, 1,2-Propylen, 1,3-Propylen, 1,4-Butylen, 1,3-Butylen, 2-Methyl-1,2-propylen, 1,3-Pentylen, 1,5-Pentylen, 2,2-Dimethyl-1,3-propylen, 1,6-Hexylen, 2-Methyl-1,5-pentylen, 1,7-Heptylen, 1,8-Octylen, 2,5-Dimethyl-1,6-hexylen, 1,9-Nonylene, 2,2(4),4-Trimethyl-1,6-hexylen, 1,10-Decylen, 1,11-Undecylen, 2-Butyl-2-ethyl-1,5-pentylen, 1,12-Dodecylen, 1,2-Cyclohexylen, 1,3-Cyclohexylen, 1,4-Cyclohexylen, (1,5,5-Trimethylcyclohexan-1-yl)methan-1,3, 4(2)-Methyl-1,3-cyclohexylen, 1,3-Cyclohexylen-bis(methylen), 1,4-Cyclohexylen-bis(methylen), 1,3-Phenylen-bis(methylen), 1,4-Phenylen-bis(methylen), 3-Oxa-1,5-pentylen, 3,6-Dioxa-1,8-octylen, 4,7-Dioxa-1,10-decylen, 3-Aza-1,5-pentylen, 3,6-Diaza-1,8-octylen, 4,7-Diaza-1,11-decylen und 3-Aza-1,6-hexylen.

Bevorzugt ist A frei von Stickstoffatomen. Damit werden Versiegelungen mit besonders schönen Oberflächen erhalten.
Bevorzugt ist A frei von Ethergruppen. Damit werden Versiegelungen mit besonders guter Hydrolysebeständigkeit erhalten.

Besonders bevorzugt steht A für einen C₂ bis C₈ Alkylen-, Cycloalkylen- oder Arylalkylen-Rest, insbesondere für 1,2-Ethylen, 1,2-Propylen, 1,3-Propylen, 1,4-Butylen, 1,3-Butylen, 1,5-Pentylen, 1,6-Hexylen, 2-Methyl-1,5-pentylen, 1,7-Heptylen, 1,8-Octylen, 1,3-Cyclohexylen-bis(methylen), 1,4-Cyclohexylen-bis(methylen) oder 1,3-Phenylen-bis(methylen). Diese Amine der Formel (I) ermöglichen besonders gute Verlaufseigenschaften.

Am meisten bevorzugt steht A für 1,2-Ethylen. Diese Amine der Formel (I) ermöglichen einen besonders guten Verlauf, eine besonders gute Entlüftung, eine besonders schnelle Aushärtung und besonders wenig Vergilbung.

Bevorzugt ist Y ausgewählt aus der Gruppe bestehend aus H, Methyl, Ethyl, Propyl, Isopropyl, Butyl, Pentyl, Heptyl, Hept-2-yl, Phenyl, 4-Methylphenyl, 4-Isopropylphenyl, 4-tert.Butylphenyl, 4-Methoxyphenyl, 4-Dimethylaminophenyl, 1-Naphthyl, Benzyl und Cyclohexyl.

Besonders bevorzugt steht Y für Phenyl oder Cyclohexyl, insbesondere für Phenyl. Ein solches Amin der Formel (I) ermöglicht eine besonders schnelle Aushärtung und besonders schöne Oberflächen mit hohem Glanz.

Bevorzugt ist das Amin der Formel (I) ausgewählt aus der Gruppe bestehend aus N-Benzyl-1,2-ethandiamin, N,N'-Dibenzyl-1,2-ethandiamin, N-(4-Methylbenzyl)-1,2-ethandiamin, N,N'-Bis(4-methylbenzyl)-1,2-ethandiamin, N-(4-Isopropylbenzyl)-1,2-ethandiamin, N,N'-Bis(4-isopropylbenzyl)-1,2-ethandiamin, N-(4-tert.Butylbenzyl)-1,2-ethandiamin, N,N'-Bis(4-tert.butylbenzyl)-1,2-ethandiamin, N-(4-Methoxybenzyl)-1,2-ethandiamin, N,N'-Bis(4-methoxybenzyl)-1,2-ethandiamin, N-(4-Dimethylaminobenzyl)-1,2-ethandiamin, N,N'-Bis(4-dimethylaminobenzyl)-1,2-ethandiamin, N-(1-Naphthylmethyl)-1,2-ethandiamin, N,N'-Bis(1-naphthylmethyl)-1,2-ethandiamin, N-Cyclohexylmethyl-1,2-ethandiamin, N,N'-Bis(cyclohexylmethyl)-1,2-ethandiamin, N-Benzyl-1,2-propandiamin, N,N'-Dibenzyl-1,2-propandiamin, N-Benzyl-1,6-hexandiamin, N,N'-Dibenzyl-1,6-hexandiamin, N-Benzyl-2-methyl-1,5-pentandiamin, N,N'-Dibenzyl-2-methyl-1,5-pentandiamin, N-Benzyl-1,3-bis(aminomethyl)benzol, N,N'-Dibenzyl-1,3-bis(aminomethyl)benzol, N-(2-Ethylhexyl)-1,3-bis(aminomethyl)benzol, N,N'-Bis(2-ethylhexyl)-1,3-bis(aminomethyl)-benzol, N-Benzyl-1,3-bis(aminomethyl)cyclohexan, N,N'-Dibenzyl-1,3-bis(aminomethyl)cyclohexan, N-Phenylethyl-1,3-bis(aminomethyl)benzol und N,N'-Bis(phenylethyl)-1,3-bis(aminomethyl)benzol.

Ganz besonders bevorzugt stehen A für 1,2-Ethylen und Y für Phenyl. Ein solches Amin der Formel (I) ist N-Benzyl-1,2-ethandiamin, N,N'-Dibenzyl-1,2-ethandiamin oder eine Mischung davon, insbesondere eine Mischung in einem Gewichtsverhältnis im Bereich von 70/30 bis 90/10 zwischen N-Benzyl-1,2-ethandiamin und N,N'-Dibenzyl-1,2-ethandiamin. Ein solches Amin der Formel (I) ermöglicht wenig vergilbende, geruchsarme Epoxidharz-Versiegelungen mit besonders gutem Verlauf, besonders schneller Aushärtung und besonders ebenmässiger, gut entlüfteter Oberfläche.

Bevorzugt steht Z für H. Ein solches Amin der Formel (I) ermöglicht eine besonders schnelle Aushärtung.

Das am meisten bevorzugte Amin der Formel (I) ist N-Benzyl-1,2-ethandiamin.

Das Amin der Formel (I) ist bevorzugt hergestellt mittels partieller Alkylierung von mindestens einem Amin der Formel H₂N-A-NH₂ mit mindestens einem Alkylierungsmittel. Bevorzugt ist die Alkylierung eine reduktive Alkylierung, wobei als Alkylierungsmittel ein Aldehyd der Formel Y-CH=O und Wasserstoff eingesetzt wird.

Das Amin der Formel (I) kann in freier Form oder als Addukt mit mindestens einem Epoxidharz, insbesondere mindestens einem aromatischen Diepoxid mit einem Epoxid-Equivalentgewicht im Bereich von 110 bis 200 g/mol, bevorzugt 150 bis 200 g/mol, insbesondere einem Bisphenol A-Diglycidylether und/oder Bisphenol F-Diglycidylether, vorhanden sein. Dabei ist das Addukt insbesondere mit einem solchen Aminüberschuss hergestellt, dass pro Epoxidgruppe mindestens 1.3 mol Amin der Formel (I) eingesetzt wurden.
Bevorzugt ist das Amin der Formel (I) in freier, nicht adduktierter Form vorhanden.

Bevorzugt ist das Amin der Formel (I) in der Epoxidharz-Versiegelung in einer solchen Menge vorhanden, dass in der Härter-Komponente 5 bis 80%, bevorzugt 10 bis 50%, aller vorhandenen Aminwasserstoffe von Aminen der Formel (I) stammen und mindestens ein weiteres Amin mit mindestens vier aliphatischen Aminwasserstoffen vorhanden ist. Dabei werden die Aminwasserstoffe von adduktiertem Amin der Formel (I) ebenfalls mitgerechnet.

Als weiteres Amin mit mindestens vier aliphatischen Aminwasserstoffen geeignet sind insbesondere handelsübliche Amine mit zwei primären Aminogruppen und gegebenenfalls weiteren Aminogruppen, insbesondere 2,2-Dimethyl-1,3-propandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2(4),4-Trimethyl-1,6-hexandiamin (TMD), 1,7-Heptandiamin, 1,8-Octandiamin, 1,9-Nonandiamin, 1,10-Decandiamin, 1,11-Undecandiamin, 1,12-Dodecandiamin, 1-Amino-3-aminomethyl-3,5,5-trimethylcyclohexan (IPDA), 1,2-Diaminocyclohexan, 1,3-Diaminocyclohexan, 1,4-Diaminocyclohexan, 1,3-Bis(aminomethyl)cyclohexan, 1,4-Bis(aminomethyl)cyclohexan, Bis(4-aminocyclohexyl)methan, Bis(4-amino-3-methylcyclohexyl)methan, Bis(4-amino-3-ethylcyclohexyl)methan, Bis(4-amino-3,5-dimethylcyclohexyl)methan, Bis(4-amino-3-ethyl-5-methylcyclohexyl)methan, 2(4)-Methyl-1,3-diaminocyclohexan, 2,5(2,6)-Bis(aminomethyl)bicyclo[2.2.1]heptan (NBDA), 3(4),8(9)-Bis(aminomethyl)tricyclo[5.2.1.0^{2,6}]decan, 1,4-Diamino-2,2,6-trimethylcyclohexan (TMCDA), 1,8-Menthandiamin, 3,9-Bis(3-aminopropyl)-2,4,8,10-tetraoxaspiro[5.5]-undecan, 1,3-Bis(aminomethyl)benzol (MXDA), 1,4-Bis(aminomethyl)benzol, Bis(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin oder höhere Oligomere dieser Diamine, Bis(3-aminopropyl)polytetrahydrofurane oder andere Polytetrahydrofurandiamine, Polyoxyalkylendi- oder -triamine, insbesondere Polyoxypropylendiamine oder Polyoxypropylentriamine wie Jeffamine^{®} D-230, Jeffamine^{®} D-400 oder Jeffamine^{®} T-403 (alle von Huntsman), Diethylentriamin (DETA), Triethylentetramin (TETA), Tetraethylenpentamin (TEPA), Pentaethylenhexamin (PEHA), Dipropylentriamin (DPTA), N-(2-Aminoethyl)-1,3-propandiamin (N3-Amin), N,N'-Bis(3-aminopropyl)ethylendiamin (N4-Amin), N,N'-Bis(3-aminopropyl)-1,4-diaminobutan, N5-(3-Aminopropyl)-2-methyl-1,5-pentandiamin, N3-(3-Aminopentyl)-1,3-pentandiamin, N5-(3-Amino-1-ethylpropyl)-2-methyl-1,5-pentandiamin, N,N'-Bis(3-amino-1-ethylpropyl)-2-methyl-1,5-pentandiamin, 3-(2-Aminoethyl)aminopropylamin, Bis(hexamethylen)triamin (BHMT), sowie weiterhin Addukte dieser Amine mit Epoxidharzen.

Bevorzugt ist das weitere Amin mit mindestens vier aliphatischen Aminwasserstoffen ausgewählt aus der Gruppe bestehend aus TMD, IPDA, 1,3-Bis(aminomethyl)cyclohexan, 1,4-Bis(aminomethyl)cyclohexan und MXDA.

Davon besonders bevorzugt ist 1,3-Bis(aminomethyl)cyclohexan. Eine Kombination aus 1,3-Bis(aminomethyl)cyclohexan und dem Amin der Formel (I) in der Härter-Komponente ermöglicht Epoxidharz-Versiegelungen mit besonders geringem Geruch, besonders schneller Aushärtung, besonders hoher Dehnbarkeit und besonders wenig Neigung zum Vergilben.

Bevorzugt enthält die Epoxidharz-Versiegelung weitere Bestandteile, insbesondere weitere Härter, Beschleuniger, Füllstoffe, Pigmente, Verdünner, oberflächenaktive Additive und/oder Stabilisatoren.

Als weitere Härter geeignet sind die bereits genannten, sowie insbesondere Amine mit zwei oder drei aliphatischen Aminwasserstoffen, Polyamidoamine, Phenalkamine, aromatische Amine oder Mercaptane.

Als Beschleuniger geeignet sind insbesondere Säuren oder zu Säuren hydrolysierbare Verbindungen, Wasser, Nitrate, tertiäre Amine oder Mannich-Basen, insbesondere Salicylsäure, Calciumnitrat, Wasser oder 2,4,6-Tris(dimethylaminomethyl)-phenol, oder eine Kombination dieser Beschleuniger.

Geeignete Füllstoffe sind insbesondere gemahlenes oder gefälltes Calciumcarbonat, welches gegebenenfalls mit Fettsäure, insbesondere Stearaten, beschichtet ist, Baryt (Schwerspat), Talk, Quarzmehl, Quarzsand, Siliciumcarbid, Eisenglimmer, Dolomit, Wollastonit, Kaolin, Mica (Kalium-Aluminium-Silikat), Molekularsieb, Aluminiumoxid, Zinkoxid, Aluminium-dotiertes Zinkoxid, Aluminiumhydroxid, Magnesiumhydroxid, Kieselsäure, Zement, Gips, Flugasche, Russ, Graphit, Metall-Pulver wie Aluminium, Kupfer, Eisen, Zink, Silber oder Stahl, PVC-Pulver oder Hohlkugeln. Davon bevorzugt sind Calciumcarbonat, Quarzmehl, Quarzsand oder eine Kombination davon.

Geeignete Pigmente sind insbesondere Titandioxide, Eisenoxide, Chrom(III)oxide, organische Pigmente oder Russ.

Geeignete Verdünner sind insbesondere Xylol, 2-Methoxyethanol, Dimethoxyethanol, 2-Ethoxyethanol, 2-Propoxyethanol, 2-Isopropoxyethanol, 2-Butoxyethanol, 2-Phenoxyethanol, 2-Benzyloxyethanol, Benzylalkohol, Ethylenglykol, Ethylenglykoldimethylether, Ethylenglykoldiethylether, Ethylenglykoldibutylether, Ethylenglykoldiphenylether, Diethylenglykol, Diethylenglykolmonomethylether, Diethylenglykolmonoethylether, Diethylenglykolmono-n-butylether, Diethylenglykoldimethylether, Diethylenglykoldiethylether, Diethylenglykoldi-n-butylylether, Propylenglykolbutylether, Propylenglykolphenylether, Dipropylenglykol, Dipropylenglykolmonomethylether, Dipropylenglykoldimethylether, Dipropylenglykoldi-n-butylether, 2,2,4-Trimethyl-1,3-pentandiolmonoisobutyrat, Diphenylmethan, Diisopropylnaphthalin, Erdölfraktionen wie zum Beispiel Solvesso^{®}-Typen (von Exxon), Alkylphenole wie tert.Butylphenol, Nonylphenol, Dodecylphenol, Cardanol, styrolisiertes Phenol, Bisphenole, aromatische Kohlenwasserstoffharze, insbesondere Phenolgruppen-haltige Typen, alkoxyliertes Phenol, insbesondere ethoxyliertes oder propoxyliertes Phenol, insbesondere 2-Phenoxyethanol, Adipate, Sebacate, Phthalate, Benzoate, organische Phosphor- oder Sulfonsäureester oder Sulfonamide.
Bevorzugt sind Verdünner mit einem Siedepunkt von mehr als 200°C. Besonders bevorzugt ist Benzylalkohol.

Bevorzugt enthält die Epoxidharz-Versiegelung einen geringen Gehalt an organischen Verdünnern mit einem Siedepunkt von weniger als 200°C, insbesondere weniger als 1 Gewichts-%.
Bevorzugt enthält die Epoxidharz-Versiegelung einen geringen Gehalt an Verdünnern mit einem Siedepunkt von mehr als 200°C, insbesondere weniger als 10 Gewichts-%, bevorzugt weniger als 5 Gewichts-%.
Eine solche Epoxidharz-Versiegelung verursacht während und nach der Applikation besonders geringe Emissionen.

Geeignete oberflächenaktive Additive sind insbesondere Entschäumer, Entlüfter, Netzmittel, Dispergiermittel, Verlaufsmittel oder dispergiertes Paraffinwachs. Bevorzugt enthält die Epoxidharz-Beschichtung eine Kombination solcher Additive.

Geeignete Stabilisatoren sind insbesondere Stabilisatoren gegen UV-Strahlung oder Wärme.

Gegebenenfalls enthält die Epoxidharz-Versiegelung weitere handelsübliche Hilfs- und Zusatzstoffe, insbesondere Rheologie-Modifizierer wie insbesondere Antiabsetzmittel, Haftverbesserer, insbesondere Organoalkoxysilane oder flammhemmende Substanzen.

Bevorzugt ist die Epoxidharz-Versiegelung nicht wasserbasiert. Bevorzugt enthält sie einen Gehalt an Wasser von weniger als 5 Gewichts-%, insbesondere weniger als 2 Gewichts-%, bezogen auf die gesamte Epoxidharz-Versiegelung. Eine solche Versiegelung ist besonders robust gegenüber Hydrolyse.

Die Harz-Komponente und die Härter-Komponente der Epoxidharz-Versiegelung werden in voneinander getrennten Gebinden gelagert und erst kurz vor der Applikation vermischt. Dabei enthält die Harz-Komponente die Epoxidgruppen-haltigen Verbindungen und die Härter-Komponente enthält die mit Epoxidgruppen reaktiven Verbindungen, während weitere Inhaltsstoffe als Bestandteil der Harz- und/oder der Härter-Komponente vorhanden sein können.

Bevorzugt ist eine Epoxidharz-Versiegelung umfassend
- eine Harz-Komponente enthaltend mindestens ein Epoxid-Flüssigharz, mindestens einen Entschäumer, Füllstoffe, Pigmente und gegebenenfalls weitere Bestandteile, und
- eine Härter-Komponente umfassend mindestens ein Amin der Formel (I), mindestens ein weiteres Amin mit mindestens vier aliphatischen Aminwasserstoffen, gegebenenfalls mindestens einen Verdünner, insbesondere Benzylalkohol, und gegebenenfalls weitere Bestandteile.

Die Komponenten der Epoxidharz-Versiegelung werden kurz vor oder während der Applikation vermischt. Das Mischungsverhältnis wird bevorzugt so gewählt, dass das molare Verhältnis der gegenüber Epoxidgruppen reaktiven Gruppen zu den Epoxidgruppen im Bereich von 0.5 bis 1.5, insbesondere 0.7 bis 1.2, liegt. In Gewichtsteilen liegt das Mischungsverhältnis üblicherweise im Bereich von 1:10 bis 20:1, bevorzugt 1:1 bis 10:1.

Das Mischen der Komponenten erfolgt kontinuierlich oder batchweise mittels eines geeigneten Verfahrens, wobei darauf geachtet wird, dass zwischen dem Mischen der Komponenten und der Applikation nicht zu viel Zeit vergeht und die Applikation innerhalb der Topfzeit erfolgt. Das Mischen und die Applikation erfolgen insbesondere bei Umgebungstemperatur, welche typischerweise im Bereich von etwa 5 bis 40°C, bevorzugt bei etwa 10 bis 35°C, liegt.

Mit dem Mischen der Komponenten beginnt die Aushärtung der Epoxidharz-Versiegelung durch chemische Reaktion. Primäre und sekundäre Aminogruppen und gegebenenfalls vorhandene weitere gegenüber Epoxidgruppen reaktive Gruppen reagieren mit den Epoxidgruppen unter deren Ringöffnung. Als Ergebnis hauptsächlich dieser Reaktion polymerisiert die Epoxidharz-Versiegelung und härtet dadurch aus.
Die Aushärtung erstreckt sich typischerweise über einige Stunden bis Tage. Die Dauer hängt unter anderem von der Temperatur, der Reaktivität der Bestandteile, deren Stöchiometrie und der Gegenwart von Beschleunigern ab.

Im frisch vermischten Zustand hat die Epoxidharz-Versiegelung eine niedrige Viskosität. Bevorzugt liegt die Viskosität bei 20°C 5 Minuten nach dem Mischen der Komponenten im Bereich von 100 bis bis 3'000 mPa·s, insbesondere 500 bis 2'000 mPa·s, gemessen mittels Kegel-Platten Viskosimeter bei einer Schergeschwindigkeit von 10 s⁻¹.

Die Applikation der Epoxidharz-Versiegelung erfolgt auf die gegebenenfalls mit Quarzsand abgestreute Polyurethan-Beschichtung.
Die frisch vermischte Epoxidharz-Versiegelung wird innerhalb der Topfzeit appliziert, bevorzugt in einer Schichtdicke im Bereich von 0.1 bis 1 mm, insbesondere 0.2 bis 0.8 mm, insbesondere mit Hilfe eines Rakels, einer Rolle oder einer Walze.

Bei der Aushärtung entsteht typischerweise ein homogener, ebenmässiger, glänzender, nichtklebriger Film von hoher Härte und Robustheit, überraschend hoher Dehnbarkeit und guter Haftung zur Polyurethan-Beschichtung und dem gegebenenfalls vorhandenen Quarzsand. Für den Fall, dass die Polyurethan-Beschichtung im Überschuss mit Quarzsand abgestreut ist, überdeckt die Epoxidharz-Versiegelung die vorstehenden Sandkörner und die Oberfläche weist eine entsprechend körnige und besonders rutschhemmende Struktur auf.

Bevorzugt weist die Epoxidharz-Versiegelung eine Schichtdicke im Bereich von 0.1 bis 1 mm, 0.2 bis 0.8 mm, auf.
Die Epoxidharz-Versiegelung bildet die oberste Schicht und somit die Oberfläche des Bodens.

Die Epoxidharz-Versiegelung weist eine überraschend hohe Dehnbarkeit auf. Insbesondere weist sie eine solche Dehnbarkeit auf, dass ein Probekörper bestehend aus einer Polyurethan-Beschichtung von 2 mm Dicke und der darauf in einer Dicke von 0.5 mm applizierten Epoxidharz-Versiegelung in einem 3-Punkt-Biegeversuch mit einer Stützweite von 48 mm bei einer Prüfgeschwindigkeit von 10 mm/min mit der Versiegelung auf der Zugseite in Anlehnung an DIN EN ISO 178 eine sekrechte Auslenkung (maximale Biegung) von mindestens 7.5 mm, bevorzugt mindestens 8 mm, insbesondere mindestens 8.5 mm, ermöglicht, bevor die Epoxidharz-Versiegelung bricht.

Mit ihrer guten Haftung auf der Polyurethan-Beschichtung, der hohen Abrasionsbeständigkeit und Kratzfestigkeit und ihrer hohen Robustheit gegenüber Kälte, Hitze, Wasser, Streusalz, Treibstoffen, Motorenöl und üblichen Reinigungsmitteln, ihrer überraschend hohen Dehnbarkeit und ihrer hohen Ästhetik gewährleistet die Epoxidharz-Versiegelung eine qualitativ hochwertige Oberfläche des Bodenschutzsystems, durch welche die Böden von beispielsweise Parkdecks bei hoher Rissbewegung und Befahren dauerhaft geschützt sind.

Das erfindungsgemässe Bodenschutzsystem ermöglicht eine überraschend gute Rissüberbrückung ohne Risse in der Versiegelung.
Insbesondere besteht das erfindungsgemässe Bodenschutzsystem einen Test auf dynamische Rissüberbrückung bei -20°C gemäss EN 1062-7 Verfahren B 3.2 ohne Risse in der Epoxidharz-Versiegelung.

Ein solches Bodenschutzsystem dichtet die Böden von beispielsweise Parkdecks dauerhaft ab und schützt den darunterliegenden Boden, insbesondere mit Stahl armierter Beton, vor eindringender Feuchtigkeit, Streusalz und weiteren Substanzen.

Bevorzugt ist das erfindungsgemässe Bodenschutzsystem Bestandteil eines Parkdecks oder einer befahrbaren Rampe. Als Parkdeck werden dabei alle Arten von offenen, halboffenen oder geschlossenen Garagen, Parkhäusern, Parkplätzen oder Tiefgaragen bezeichnet.

Ein weiterer Gegenstand der vorliegenden Erfindung ist eine Methode zum Schützen von Böden, dadurch gekennzeichnet, dass eine Epoxidharz-Versiegelung enthaltend mindestens ein Amin der Formel (I) in einer Schichtdicke im Bereich von 0.1 bis 1 mm, bevorzugt 0.2 bis 0.8 mm, auf eine gegebenenfalls mit Quarzsand abgestreute Polyurethan-Beschichtung appliziert wird, wie vorgängig beschrieben.

Bevorzugt stammen dabei in der Epoxidharz-Versiegelung 5 bis 80%, bevorzugt 10 bis 50%, aller vorhandenen Aminwasserstoffe von Aminen der Formel (I) und es ist mindestens ein weiteres Amin mit mindestens vier aliphatischen Aminwasserstoffen vorhanden, bevorzugt die bereits genannten, insbesondere 1,3-Bis(aminomethyl)cyclohexan.

Bevorzugt weist die Polyurethan-Beschichtung, auf welche die Epoxidharz-Versiegelung appliziert wird, eine Schichtdicke im Bereich von 2 bis 6 mm auf und besteht aus einer oder mehreren Schichten, wobei mindestens eine dieser Schichten eine Bruchdehnung von mindestens 200%, insbesondere mindestens 300%, aufweist, bestimmt bei 23°C gemäss DIN EN 53504 bei einer Zuggeschwindigkeit von 200 mm/min.

Besonders bevorzugt besteht die Polyurethan-Beschichtung aus zwei Schichten, wobei die untere Schicht eine Dicke im Bereich von 1.2 bis 3 mm und eine Bruchdehnung von mindestens 200% aufweist, und die obere Schicht eine Dicke im Bereich von 1.2 bis 3 mm und eine Zugfestigkeit von mindestens 9 MPa aufweist. Bevorzugt umfass die Polyurethan-Beschichtung Quarzsand, welcher in und/oder auf die Polyurethan-Beschichtung gestreut wurde.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.
"AHEW" steht für das Aminwasserstoff-Equivalentgewicht.
"EEW" steht für das Epoxid-Equivalentgewicht.
Als "Normklima" ("NK") wird eine Temperatur von 23±1°C und eine relative Luftfeuchtigkeit von 50±5% bezeichnet.
Die verwendeten Chemikalien waren, sofern nicht anders bezeichnet, von Sigma-Aldrich Chemie GmbH.

### Verwendete Substanzen und Abkürzungen:

- Araldite^{®} GY 250:: Bisphenol A-Diglycidylether, EEW 187 g/mol (von Huntsman)
- Araldite^{®} DY-E:: Monoglycidylether von C₁₂- bis C₁₄-Alkoholen, EEW ca. 290 g/Eq (von Huntsman)
- Ancamine^{®} K54: 2,4,6-Tris(dimethylaminomethyl)phenol (von Air Products)
- B-EDA: N-Benzyl-1,2-ethandiamin, AHEW 50.1 g/eq, hergestellt wie nachfolgend beschrieben
- DB-EDA: N,N'-Dibenzyl-1,2-ethandiamin, AHEW 120.2 g/eq
- 1,3-BAC: 1,3-Bis(aminomethyl)cyclohexan, AHEW 35.5 g/Eq (von Mitsubishi Gas Chemical)
- IPDA: 1-Amino-3-aminomethyl-3,5,5-trimethylcyclohexan, AHEW 42.6 g/eq (Vestamin^{®} IPD, von Evonik)
- MXDA: 1,3-Bis(aminomethyl)benzol, AHEW 34 g/Eq (von Mitsubishi Gas Chemical)
- D-230: Polyoxypropylendiamin, mittleres Molekulargewicht 230 g/mol, AHEW 60 g/mol (Jeffamine^{®} D-230, von Huntsman)
- Sikafloor^{®}-151:: 2-komponentige Epoxidharz-Grundierung (von Sika)
- Sikafloor^{®}-376:: 2-komponentige Polyurethan-Beschichtung auf Basis von TDI-basiertem Isocyanatgruppen-haltigem Polymer und 3,5-Dimethylthio-2,4(6)-toluoldiamin, mit einer Zugfestigkeit von ≥ 5 MPa, einer Bruchdehnung von ≥ 500% und einer Shore A Härter von ≥ 60 (von Sika)
- Sikafloor^{®}-377:: 2-komponentige Polyurethan-Beschichtung auf Basis von polymerem MDI, Rizinusöl und Rizinusöl-basiertem Polyol, mit einer Zugfestigkeit von ≥ 11 MPa und einer Bruchdehnung von ≥ 50% (von Sika)
- Sikafloor^{®}-378:: 2-komponentige Epoxidharz-Versiegelung mit einer Härter-Komponente auf der Basis von IPDA, MXDA und D-230 (von Sika)

### N-Benzyl-1,2-ethandiamin (B-EDA):

180.3 g (3 mol) 1,2-Ethandiamin wurden bei Raumtemperatur vorgelegt, mit einer Lösung aus 106.0 g (1 mol) Benzaldehyd in 1200 ml Isopropanol vermischt und 2 Stunden gerührt, anschliessend bei 80°C, 80 bar Wasserstoff-Druck und einem Fluss von 5 ml/min auf einer kontinuierlich arbeitenden Hydrierapparatur mit Pd/C-Festbettkatalysator hydriert und die hydrierte Lösung am Rotationsverdampfer bei 65°C eingeengt, wobei unreagiertes 1,2-Ethandiamin, Wasser und Isopropanol entfernt wurden. Die so erhaltene Reaktionsmischung wurde bei 80°C unter Vakuum mittels Destillation gereinigt. Erhalten wurde eine farblose Flüssigkeit mit einem mittels GC bestimmten Gehalt an N-Benzyl-1,2-ethandiamin von > 97%.

### Herstellung von Epoxidharz-Versiegelungen:

### Beispiele 1 bis 8:

Für diese Beispiele wurde eine Harz-Komponente hergestellt, indem die folgenden Inhaltsstoffe mittels eines Zentrifugalmischers (SpeedMixer^{™} DAC 150, FlackTek Inc.) vermischt und unter Ausschluss von Feuchtigkeit aufbewahrt wurden:
166.8 Gewichtsteile Araldite^{®} GY 250,
26.7 Gewichtsteile Araldite^{®} DY-E,
153.8 Gewichtsteile Quarzmehl,
4.4 Gewichtsteile Entschäumer,
61.3 Gewichtsteile Pigmentpaste kieselgrau.

Für jedes Beispiel wurden die in den Tabellen 1 und 2 angegebenen Inhaltsstoffe der Härter-Komponente in den angegebenen Mengen (in Gewichtsteilen) mittels des Zentrifugalmischers vermischt und unter Ausschluss von Feuchtigkeit aufbewahrt.

Anschliessend wurden die beiden Komponenten mittels des Zentrifugalmischers zu einer homogenen Flüssigkeit verarbeitet und diese unverzüglich folgendermassen geprüft:
Die **Viskosität** wurde 5 min nach dem Vermischen der Harz- und der Härter-Komponente mittels Kegel-Platten Viskosimeter bei einer Schergeschwindigkeit von 10 s⁻¹ und einer Temperatur von 20°C gemessen.
Die **Gelierzeit** wurde bestimmt, indem eine frisch vermischte Menge von ca. 3 g im Normklima mit einem Spatel in regelmässigen Abständen bewegt wurde, bis die Masse gelierte.
Die **Shore D** Härte wurde bestimmt nach DIN 53505 an zwei zylindrischen Prüfkörpern (Durchmesser 20 mm, Dicke 5 mm), wobei einer im Normklima und einer bei 8°C und 80% relativer Feuchtigkeit gelagert wurde. Dabei wurde die Härte jeweils nach 1 Tag, 2 Tagen und 7 Tagen gemessen.

Als Mass für die Dehnbarkeit der Versiegelung wurde jede Zusammensetzung in einer Schichtdicke von 500 µm auf einen ausgehärteten Polyurethan-Film aufgebracht und 14 Tage im Normklima aushärten lassen. Der ausgehärtete Polyurethan-Film war hergestellt mit Sikafloor^{®}-376, welches vorschriftsgemäss vermischt und in einer Schichtdicke von 2 mm während 14 Tagen im Normklima gelagert war. Aus dem so hergestellten Schichtverbund wurden jeweils 3 Probekörper von 70 x 40 x 2.5 mm ausgeschnitten und damit ein 3-Punkt Biegeversuch mit einer Stützweite von 48 mm bei einer Prüfgeschwindigkeit von 10 mm/min mit der Versiegelung auf der Zugseite (Aussenseite der Biegung) in Anlehnung an DIN EN ISO 178 durchgeführt, wobei die **maximale Biegung** bzw. Auslenkung der Probe in der Senkrechten bei der maximalen Kraft bestimmt wurde.

Die Resultate sind in den Tabellen 1 und 2 angegeben.
Die mit "(Ref.)" bezeichneten Beispiele sind Vergleichsbeispiele.

**Tabelle 1: Zusammensetzung und Eigenschaften der Beispiele 1 bis 4.**

| **Beispiel** | | **1 (Ref.)** | **2** | **3** | **4** |
|---|---|---|---|---|---|
| **Härter-Komponente:** | | 413.0 | 413.0 | 413.0 | 413.0 |

| **Härter-Komponente:** | | | | | |
|---|---|---|---|---|---|
| | 1,3-BAC | 35.5 | 30.2 | 24.9 | 30.5 |
| | B-EDA | - | 7.5 | 15.0 | - |
| DB-EDA | | - | - | - | 16.8 |
| Benzylalkohol | | 10.0 | 10.0 | 10.0 | 10.0 |
| Ancamine^{®} K54 | | 2.0 | 2.0 | 2.0 | 2.0 |
| Viskosität (5') [Pa·s] | | 1.84 | 1.58 | 1.42 | 1.45 |
| Gelierzeit [h:min] | | 2:15 | 2:35 | 3:00 | 2:50 |
| Shore D | (1d NK) | 81 | 84 | 76 | 78 |
| | (2d NK) | 82 | 85 | 85 | 80 |
| | (7d NK) | 85 | 86 | 85 | 80 |
| Shore D | (1d 8°/80%) | 73 | 73 | 69 | 68 |
| | (2d 8°/80%) | 82 | 81 | 81 | 83 |
| | (7d 8°/80%) | 85 | 81 | 82 | 85 |
| maximale Biegung [mm] | | 7.9 | 8.8 | 9.6 | 9.0 |

**Tabelle 2: Zusammensetzung und Eigenschaften der Beispiele 5 bis 8. "n.b." steht für "nicht bestimmt" (zu weich)**

| **Beispiel** | | **5 (Ref.)** | **6** | **7** | **8 (Ref.)** |
|---|---|---|---|---|---|
| **Harz-Komponente:** | | 413.0 | 413.0 | 413.0 | 413.0 |

| **Härter-Komponente:** | | | | | |
|---|---|---|---|---|---|
| | IPDA | 21.3 | 14.9 | 17.0 | 14.9 |
| | MXDA | 17.0 | 11.9 | 13.6 | 11.9 |
| | B-EDA | - | 15.0 | - | - |
| | DB-EDA | - | - | 18.0 | - |
| | D-230 | - | - | - | 18.0 |
| Benzylalkohol | | 10.0 | 10.0 | 10.0 | 10.0 |
| Ancamine^{®} K54 | | 2.0 | 2.0 | 2.0 | 2.0 |
| Viskosität (5') [Pa·s] | | 1.88 | 1.59 | 1.57 | 1.48 |
| Gelierzeit [h:min] | | 3:00 | 3:10 | 3:30 | 4:10 |
| Shore D | (1d NK) | 80 | 80 | 72 | 72 |
| | (2d NK) | 81 | 81 | 78 | 77 |
| | (7d NK) | 83 | 85 | 83 | 83 |
| Shore D | (1d 8°/80%) | 49 | n.b. | n.b. | n.b. |
| | (2d 8°/80%) | 82 | 72 | 60 | 60 |
| | (7d 8°/80%) | 84 | 82 | 72 | 72 |
| maximale Biegung [mm] | | 6.3 | 8.0 | 9.4 | 7.0 |

### Herstellung von Bodenschutzsystemen:

### Beispiel 9:

Drei Betonprismen der Dimension (Länge x Breite x Höhe) 225 x 160 x 50 mm wurden mit 0.5 kg/m² Sikafloor^{®}-151 grundiert und die noch nasse Grundierung mit 0.8 kg/m² Quarzsand 0.3 bis 0.8 mm lose abgesandet.

Nach einer Aushärtezeit von 24 h wurden 1.9 kg/m² der Polyurethan-Beschichtung Sikafloor^{®}-376 als Dichtungsschicht aufgetragen und 24 h aushärten lassen. Anschliessend wurden 1.7 kg/m² der Polyurethan-Beschichtung Sikafloor^{®}-377 als Verschleissschicht aufgetragen, darin 0.85 kg/m² Quarzsand 0.1 bis 0.3 mm eingestreut und anschliessend die Oberfläche der noch nassen Beschichtung im Überschuss mit Quarzsand 0.3 bis 0.8 mm abgestreut. Nach 24 h Aushärtezeit wurde der überschüssige Quarzsand mittels Besen und Staubsauger entfernt. Schliesslich wurde auf die mit Quarzsand abgestreute Polyurethan-Beschichtung die Epoxidharz-Versiegelung aus **Beispiel 2** in einer Menge von 0.7 kg/m² mittels einer Rolle appliziert und aushärten lassen.

Die Epoxidharz-Versiegelung zeigte eine ausgezeichnete Verarbeitbarkeit mit kaum Geruch, gutem Verlauf und guter Entlüftung. Die erhaltene grau pigmentierte Oberfläche war ebenmässig, hart, glänzend, klebfrei und frei von Schlieren oder Trübungen.

Der Aufbau entspricht einem Oberflächenschutzsystem OS 11 a gemäss DIN EN 1504-2.

Nach einer Lagerung von 14 Tagen im Normklima gefolgt von 7 Tagen in einem Umluftofen bei 70°C wurden die mit dem Bodenschutzsystem beschichteten Betonprismen bei -20°C gemäss EN 1062-7 Verfahren B auf dynamische Rissüberbrückung geprüft. Dazu wurde im Betonprisma ein Riss angebracht, ohne dass das Bodenschutzsystem dabei beschädigt wurde. Die Prüfung wurde nach Verfahren B 3.2 mit einer unteren Rissbreite von 0.1 mm, einer oberen Rissbreite von 0.3 mm und einer Rissbreitenänderung von 0.2 mm mit 1'000 Risswechseln bei einer Frequenz von 0.03 Hz durchgeführt. Nach der Prüfung wurde das Bodenschutzsystem der drei Prismen optisch auf Risse im Bereich der Polyurethan-Beschichtung und in der Epoxidharz-Versiegelung geprüft. Die Resultate sind in der Tabelle 3 angegeben.

### Beispiel 10:

Weitere drei Betonprismen wurden wie für Beispiel **9** beschrieben mit einem Bodenschutzsystem beschichtet. Der Aufbau des Bodenschutzsystems und das Resultat der Prüfung auf dynamischen Rissüberbrückung sind in der Tabelle 3 angegeben.

Dieser Aufbau entspricht einem Oberflächenschutzsystem OS 10 gemäss DIN EN 1504-2.

Die Prüfung wurde nach Verfahren B 4.2 mit einer unteren Rissbreite von 0.2 mm, einer oberen Rissbreite von 0.5 mm und einer Rissbreitenänderung von 0.3 mm mit 1'000 Risswechseln bei einer Frequenz von 0.03 Hz durchgeführt.

### Beispiele 11 (Ref.) und 12 (Ref.):

Als Vergleich wurden je 3 Betonprismen wie für das Beispiel **9** und **10** angegeben mit einem Bodenschutzsystem beschichtet, wobei eine nicht erfindungsgemässe Epoxidharz-Versiegelung eingesetzt wurde: Sikafloor^{®}-378 (2-komponentige Epoxidharz-Versiegelung mit einem Härter auf der Basis von IPDA, MXDA und D-230, von Sika). Der Aufbau der Bodenschutzsysteme und die Resultate der Prüfung auf dynamische Rissüberbrückung sind in der Tabelle 3 angegeben

**Tabelle 3: Aufbau und Resultate der Beispiele 9 bis 12**

| **Beispiel** | **9** | **10** | **11 (Ref.)** | **12 (Ref.)** |
|---|---|---|---|---|
| Substrat: | geschliffener Beton | | geschliffener Beton | |
| Grundierung: | Sikafloor^{®}-151 0.5 kg/m² | | Sikafloor^{®}-151 0.5 kg/m² | |
| Dichtungsschicht (Polyurethan): | Sikafloor^{®} 376 1.9 kg/m² | Sikafloor^{®} 376 2.5 kg/m² | Sikafloor^{®} 376 1.9 kg/m² | Sikafloor^{®} 376 2.5 kg/m² |
| Verschleissschicht (Polyurethan): | Sikafloor^{®} 377 1.7 kg/m2, verfüllt mit 0.85 kg/m2 Quarzsand 0.1 bis 0.3 mm | Sikafloor^{®} 377 2.2 kg/m2, verfüllt mit 1.1 kg/m2 Quarzsand 0.1 bis 0.3 mm | Sikafloor^{®} 377 1.7 kg/m2, verfüllt mit 0.85 kg/m2 Quarzsand 0.1 bis 0.3 mm | Sikafloor^{®} 377 2.2 kg/m2, verfüllt mit 1.1 kg/m2 Quarzsand 0.1 bis 0.3 mm |
| im Überschuss abgestreut mit: | Quarzsand 0.3 bis 0.8 mm | | Quarzsand 0.3 bis 0.8 mm | |
| Epoxidharz-Versiegelung: | aus **Beispiel 2** 0.7 kg/m² | | Sikafloor^{®}-378 0.7 kg/m² | |
| Aufbau entspricht | OS 11 a | OS 10 | OS 11 a | OS 10 |
| dynam ische Rissüberbrückung bei -20 °C: | **Verfahren B 3.2:** keine Risse, weder in der Polyurethan-Beschichtung noch in der Versiegelung | **Verfahren B 4.2:** keine Risse, weder in der Polyurethan-Beschichtung noch in der Versiegelung | **Verfahren B 3.2:** Risse in der Versiegelung | **Verfahren B 4.2:** Risse in der Versiegelung |
| bestanden? | ja | ja | nein | nein |

## Patentansprüche

1. Bodenschutzsystem, umfassend
(i) gegebenenfalls mindestens eine Epoxidharz-Grundierung,
(ii) mindestens eine Polyurethan-Beschichtung,
(iii) gegebenenfalls Quarzsand, welcher in und/oder auf die Polyurethan-Beschichtung gestreut wurde, und
(iv)eine Epoxidharz-Versiegelung, erhalten aus einer Harz-Komponente enthaltend mindestens ein Epoxid-Flüssigharz und einer Härter-Komponente enthaltend mindestens ein Amin der Formel (I),
Z-NH-A-NH-CH₂-Y (I)
wobei
A für einen zweiwertigen C₂ bis C₁₅ Alkylen-, Cycloalkylen- oder Arylalkylen-Rest, welcher gegebenenfalls ein oder mehrere Stickstoffatome oder Ethergruppen enthält, steht,
Z für H oder ---CH₂-Y steht, und
Y für H oder einen C₁ bis C₁₁ Alkyl-, Cycloalkyl-, Arylalkyl- oder Aryl-Rest steht,
wobei die beiden Stickstoffatome, an welche der Rest A gebunden ist, durch mindestens zwei C-Atome voneinander getrennt sind und das Amin der Formel (I) insgesamt mindestens 8 C-Atome enthält.

2. Bodenschutzsystem gemäss Anspruch 1, **dadurch gekennzeichnet, dass** die Polyurethan-Beschichtung eine Schichtdicke im Bereich von 2 bis 6 mm aufweist.

3. Bodenschutzsystem gemäss einem der Ansprüche 1 bis 2, **dadurch gekennzeichnet, dass** die Polyurethan-Beschichtung aus einer oder mehreren Schichten besteht und mindestens eine dieser Schichten eine Bruchdehnung von mindestens 200% aufweist, bestimmt bei 23°C gemäss DIN EN 53504 bei einer Zuggeschwindigkeit von 200 mm/min.

4. Bodenschutzsystem gemäss einem der Ansprüche 1 bis 3, **dadurch gekennzeichnet, dass** die Polyurethan-Beschichtung aus zwei Schichten besteht, wobei die untere Schicht eine Dicke im Bereich von 1.2 bis 3 mm und eine Bruchdehnung von mindestens 200% aufweist, und die obere Schicht eine Dicke im Bereich von 1.2 bis 3 mm und eine Zugfestigkeit von mindestens 9 MPa aufweist und gegebenenfalls mit Quarzsand verfüllt und/oder abgestreut ist, wobei Zugfestigkeit und Bruchdehnung bei 23°C gemäss DIN EN 53504 bei einer Zuggeschwindigkeit von 200 mm/min bestimmt sind.

5. Bodenschutzsystem gemäss einem der Ansprüche 1 bis 4, umfassend Quarzsand, welcher auf die Polyurethan-Beschichtung gestreut wurde.

6. Bodenschutzsystem gemäss einem der Ansprüche 1 bis 5, **dadurch gekennzeichnet, dass** A ausgewählt ist aus der Gruppe bestehend aus 1,2-Ethylen, 1,2-Propylen, 1,3-Propylen, 1,4-Butylen, 1,3-Butylen, 2-Methyl-1,2-propylen, 1,3-Pentylen, 1,5-Pentylen, 2,2-Dimethyl-1,3-propylen, 1,6-Hexylen, 2-Methyl-1,5-pentylen, 1,7-Heptylen, 1,8-Octylen, 2,5-Dimethyl-1,6-hexylen, 1,9-Nonylene, 2,2(4),4-Trimethyl-1,6-hexylen, 1,10-Decylen, 1,11-Undecylen, 2-Butyl-2-ethyl-1,5-pentylen, 1,12-Dodecylen, 1,2-Cyclohexylen, 1,3-Cyclohexylen, 1,4-Cyclohexylen, (1,5,5-Trimethylcyclohexan-1-yl)methan-1,3, 4(2)-Methyl-1,3-cyclohexylen, 1,3-Cyclohexylen-bis(methylen), 1,4-Cyclohexylen-bis(methylen), 1,3-Phenylen-bis(methylen), 1,4-Phenylen-bis(methylen), 3-Oxa-1,5-pentylen, 3,6-Dioxa-1,8-octylen, 4,7-Dioxa-1,10-decylen, 3-Aza-1,5-pentylen, 3,6-Diaza-1,8-octylen, 4,7-Diaza-1,11-decylen und 3-Aza-1,6-hexylen.

7. Bodenschutzsystem gemäss einem der Ansprüche 1 bis 6, **dadurch gekennzeichnet, dass** Y ausgewählt ist aus der Gruppe bestehend aus H, Methyl, Ethyl, Propyl, Isopropyl, Butyl, Pentyl, Heptyl, Hept-2-yl, Phenyl, 4-Methylphenyl, 4-Isopropylphenyl, 4-tert.Butylphenyl, 4-Methoxyphenyl, 4-Dimethylaminophenyl, 1-Naphthyl, Benzyl und Cyclohexyl.

8. Bodenschutzsystem gemäss einem der Ansprüche 1 bis 7, **dadurch gekennzeichnet, dass** A für 1,2-Ethylen und Y für Phenyl stehen.

9. Bodenschutzsystem gemäss einem der Ansprüche 1 bis 8, **dadurch gekennzeichnet, dass** in der Härter-Komponente 5 bis 80%, bevorzugt 10 bis 50%, aller vorhandenen Aminwasserstoffe von Aminen der Formel (I) stammen und mindestens ein weiteres Amin mit mindestens vier aliphatischen Aminwasserstoffen vorhanden ist.

10. Bodenschutzsystem gemäss Anspruch 9, **dadurch gekennzeichnet, dass** als weiteres Amin mit mindestens vier aliphatischen Aminwasserstoffen 1,3-Bis-(aminomethyl)cyclohexan vorhanden ist.

11. Bodenschutzsystem gemäss einem der Ansprüche 1 bis 10, **dadurch gekennzeichnet, dass** die Epoxidharz-Versiegelung eine Schichtdicke im Bereich von 0.1 bis 1 mm, bevorzugt 0.2 bis 0.8 mm, aufweist.

12. Bodenschutzsystem gemäss einem der Ansprüche 1 bis 11, **dadurch gekennzeichnet, dass** es einen Test auf dynamische Rissüberbrückung bei - 20°C gemäss EN 1062-7 Verfahren B 3.2 ohne Risse in der Epoxidharz-Versiegelung besteht.

13. Methode zum Schützen von Böden, **dadurch gekennzeichnet, dass** eine Epoxidharz-Versiegelung enthaltend mindestens ein Amin der Formel (I),
Z-NH-A-NH-CH₂-Y (I)
wobei
A für einen zweiwertigen C₂ bis C₁₅ Alkylen-, Cycloalkylen- oder Arylalkylen-Rest, welcher gegebenenfalls ein oder mehrere Stickstoffatome oder Ethergruppen enthält, steht,
Z für H oder ---CH₂-Y steht, und
Y für H oder einen C₁ bis C₁₁ Alkyl-, Cycloalkyl-, Arylalkyl- oder Aryl-Rest steht,
wobei die beiden Stickstoffatome, an welche der Rest A gebunden ist, durch mindestens zwei C-Atome voneinander getrennt sind und das Amin der Formel (I) insgesamt mindestens 8 C-Atome enthält,
in einer Schichtdicke im Bereich von 0.1 bis 1 mm auf eine gegebenenfalls mit Quarzsand abgestreute Polyurethan-Beschichtung appliziert wird.

14. Methode gemäss Anspruch 13, **dadurch gekennzeichnet, dass** in der Epoxidharz-Versiegelung 5 bis 80%, bevorzugt 10 bis 50%, aller vorhandenen Aminwasserstoffe von Aminen der Formel (I) stammen und mindestens ein weiteres Amin mit mindestens vier aliphatischen Aminwasserstoffen vorhanden ist.

15. Methode gemäss einem der Ansprüche 13 bis 14, **dadurch gekennzeichnet, dass** die Polyurethan-Beschichtung eine Schichtdicke im Bereich von 2 bis 6 mm aufweist und aus einer oder mehreren Schichten besteht, wobei mindestens eine dieser Schichten eine Bruchdehnung von mindestens 200% aufweist, bestimmt bei 23°C gemäss DIN EN 53504 bei einer Zuggeschwindigkeit von 200 mm/min.
